# EUROPEAN PATENT APPLICATION

(11) **EP 3 570 010 A1**
(43) Date of publication of application: **20.11.2019**
(21) Application number: 17891867.8
(22) Date of filing: 30.11.2017
(51) Int. Cl.: G01N 21/55, G01N 21/57

(54) **MEASURING DEVICE, INFORMATION PROCESSING DEVICE, INFORMATION PROCESSING METHOD, AND PROGRAM**

(30) Priority: 13.01.2017 JP 2017004614
(71) Applicant: Canon Kabushiki Kaisha, Tokyo 146-8501 (JP)
(72) Inventor: KUROKI, Yukie, Tokyo 146-8501 (JP)
(74) Representative: TBK
(86) International application number: PCT/JP2017/042952
(87) International publication number: WO 2018/131308

(57) **Abstract**

The present invention provides a measurement apparatus characterized by comprising: an irradiation unit configured to obliquely irradiate a surface with light; a detection unit configured to detect an intensity distribution of reflected light from the surface; a processing unit configured to obtain a two-dimensional BRDF of the surface based on the intensity distribution; and a display unit configured to display the BRDF obtained by the processing unit, wherein the detection unit detects the intensity distribution in a direction range that includes a first direction as a direction of specular light from the surface and does not include a direction that defines, together with the first direction, an angle not less than an angle defined by the first direction and a second direction orthogonal to the surface.

## Description

### TECHNICAL FIELD

The present invention relates to a measurement apparatus, an information processing apparatus, an information processing method, and a program.

### BACKGROUND ART

Surfaces such as printing surfaces, coating surfaces, and the outer surfaces of products are evaluated based on a plurality of types of reflection characteristics (index values) of the surfaces. The plurality of types of reflection characteristics are defined by JIS and ISO standards, and can include specular gloss, haze, DOI (Distinctness of Image), and image clarity. PTL 1 proposes a measurement apparatus that measures a plurality of types of reflection characteristics like those described above.

### CITATION LIST

### PATENT LITERATURE

PTL 1: Japanese Patent Laid-Open No. 2014-126408

### SUMMARY OF INVENTION

### TECHNICAL PROBLEM

As a surface reflection characteristic index (indicating a reflection characteristic), a BRDF (Bidirectional Reflectance Distribution Function) is available. A BRDF is an index indicating with what intensity distribution light entering a surface is reflected (the intensity distribution of reflected light), and is useful to evaluate or check a reflection characteristic of light on a measurement surface. Conventionally, however, the BRDF has not been effectively used to evaluate an outer appearance associated with a reflection characteristic of a surface.

It is therefore an exemplary object of the present invention to provide a measurement apparatus advantageous in evaluating a reflection characteristic of a surface.

### SOLUTION TO PROBLEM

In order to achieve the above object, a measurement apparatus according to one aspect of the present invention is characterized by comprising an irradiation unit configured to obliquely irradiate a surface with light, a detection unit configured to detect an intensity distribution of reflected light from the surface, a processing unit configured to obtain a two-dimensional BRDF of the surface based on the intensity distribution, and a display unit configured to display the BRDF obtained by the processing unit, wherein the detection unit detects the intensity distribution in a direction range that includes a first direction as a direction of specular light from the surface and does not include a direction that defines, together with the first direction, an angle not less than an angle defined by the first direction and a second direction orthogonal to the surface.

### ADVANTAGEOUS EFFECTS OF INVENTION

The present invention can provide a measurement apparatus advantageous in evaluating reflection characteristics of a surface.

Other features and advantages of the present invention will be apparent from the following description made with reference to the accompanying drawings. Note that the same reference numerals denote the same or similar components throughout the accompanying drawings.

### BRIEF DESCRIPTION OF DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention.
Fig. 1 is a view showing the outer appearance of a measurement system;
Fig. 2 is a block diagram showing the arrangement of the measurement system;
Fig. 3 is a view showing the arrangement of a measurement unit;
Fig. 4 is a view for explaining a BRDF;
Fig. 5 is a view showing a two-dimensional image;
Fig. 6 is a view showing a two-dimensional image;
Fig. 7 is a view showing a two-dimensional image and one-dimensional images;
Fig. 8 is a view showing a list window;
Fig. 9 is a view showing a detailed window; and
Fig. 10 is a view for explaining directions of reflected light.

### DESCRIPTION OF EMBODIMENTS

Preferred embodiments of the present invention will be described below with reference to the accompanying drawings. Note that the same reference numerals denote the same members and elements throughout the drawings, and any redundant description will be omitted.

### [Arrangement of Measurement System]

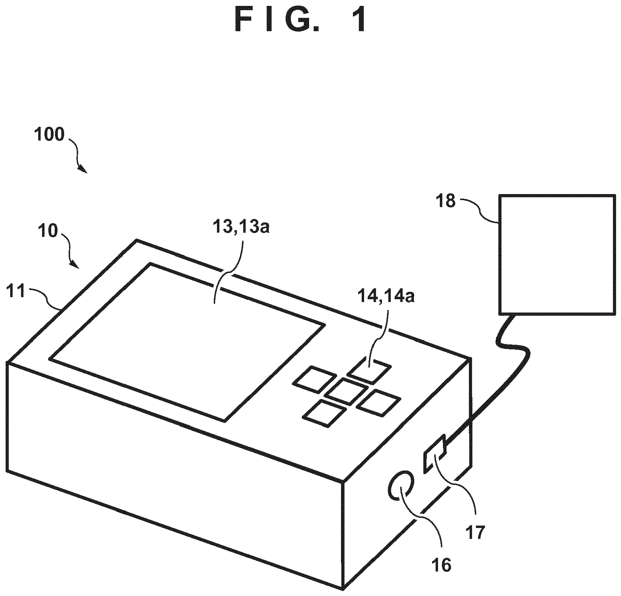

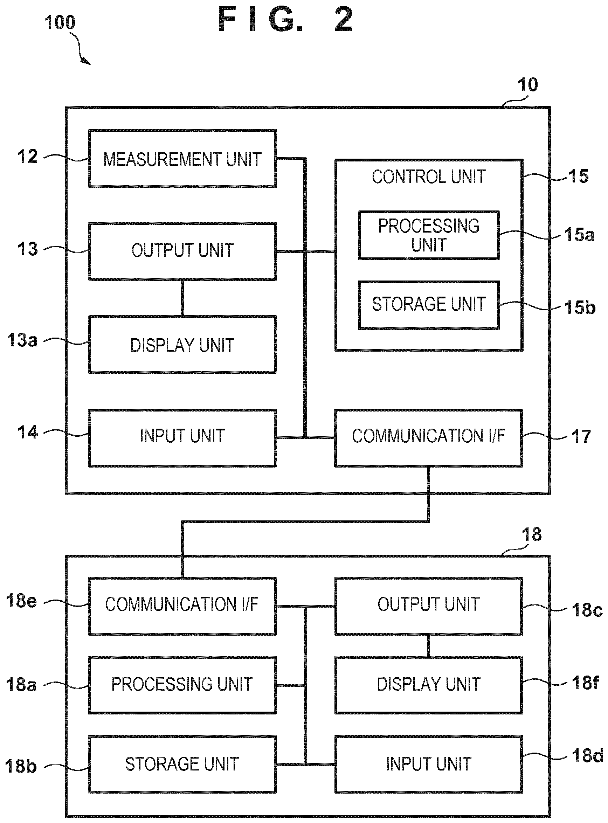

The arrangement of a measurement system 100 (measurement apparatus) according to the present invention will be described with reference to Figs. 1 and 2. Fig. 1 is a view showing an outer appearance of the measurement system 100. Fig. 2 is a block diagram showing the arrangement of the measurement system 100. The measurement system 100 can include, for example, a measurement apparatus 10 and an information processing apparatus 18 (computer). The information processing apparatus 18 can include, for example, a processing unit 18a (first processing unit) including a CPU, a storage unit 18b including a memory, an output unit 18c (second processing unit) that outputs an image, an input unit 18d including a mouse and a keyboard, and a communication I/F 18e. The output unit 18c has a function as a display control unit that causes a display unit 18f such as an LCD to output (display) an image. The information processing apparatus 18 is connected to the measurement apparatus 10 (control unit 15) via the communication I/F 18e wirelessly or using a cable, and can acquire the measurement result (reflection characteristic) obtained by measurement by measurement apparatus 10.

The measurement apparatus 10 can include, for example, a measurement unit 12, an output unit 13, an input unit 14 (operation unit), and the control unit 15, and measures a reflection characteristic of a measurement surface 20. The measurement unit 12 is provided in a housing 11 (inside the housing) and measures a reflection characteristic of the measurement surface 20 via an opening portion provided in the lower surface of the housing 11 while outside light is blocked by the housing 11. The output unit 13 outputs an image onto a display unit 13a such as an LCD provided on the upper surface of the housing. That is, the output unit 13 can function as a display control unit that causes the display unit 13a to display a reflection characteristic of a measurement surface. The input unit 14 receives various settings from a user via a plurality of buttons 14a provided on the upper surface of the housing 11. The input unit 14 according to this embodiment includes the plurality of buttons 14a. However, this is not exhaustive. For example, the display unit 13a (display) provided on the upper surface of the housing 11 may be of a touch panel type. That is, the input unit 14 may include the touch panel type display unit 13a. The control unit 15 includes a processing unit 15a including a CPU and a storage unit 15b including a memory, and controls the measurement unit 12, the output unit 13, and the input unit 14. In addition, the measurement apparatus 10 has a power button 16 and a communication I/F 17 (USB port) provided on the housing 11 (its side surface).

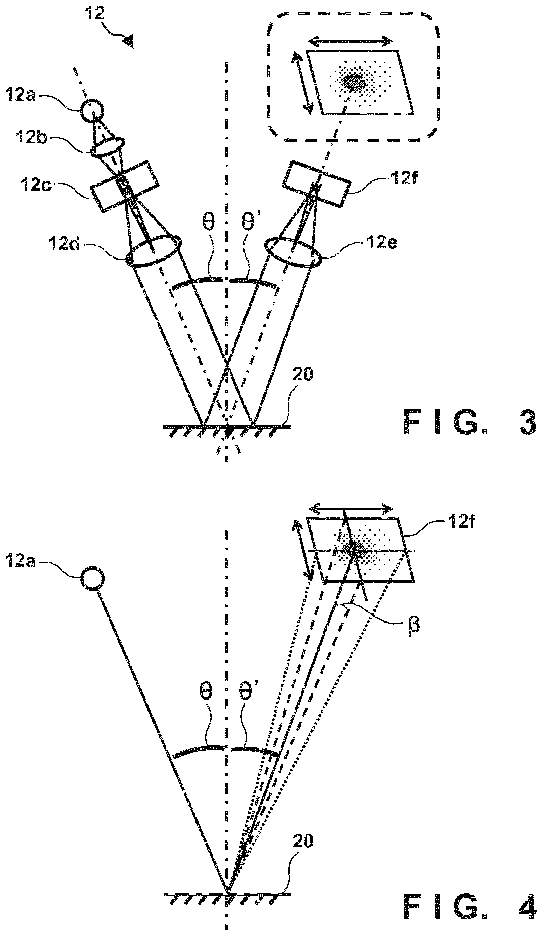

The arrangement of the measurement unit 12 and a method of measuring reflection characteristics (a plurality of types of index values) of the measurement surface 20 using the measurement unit 12 will be described next with reference to Fig. 3. Fig. 3 is a view showing the arrangement of the measurement unit 12. The measurement unit 12 can include an irradiation unit that obliquely irradiates the measurement surface 20 with light and a detection unit that detects light (reflected light) reflected by the measurement surface 20. For example, the irradiation unit includes a light source 12a, a lens 12b, a slit 12c, and a lens 12d. The detection unit can include a lens 12e and a sensor 12f.

The light beam emitted from the light source 12a is collected in the slit 12c by the lens 12b. An image of the light source 12a is temporarily formed in the slit 12c to become a rectangular secondary light source. A light beam exiting from the slit 12c becomes a divergent light beam again and is collimated by the lens 12d to irradiate the measurement surface 20. Reflected light from the measurement surface 20 is formed into a reflection pattern unique to the reflection characteristics of the measurement surface 20. The light is then collected by the lens 12e and received by the light-receiving surface of the sensor 12f. The sensor 12f includes an area sensor including a two-dimensional array of photoelectric conversion elements constituted by CCDs or CMOSs. The intensity distribution of reflected light formed on the light-receiving surface of the sensor 12f becomes a reflection pattern whose intensity changes in accordance with an angle as indicated by the inside of the broken line in Fig. 3. In this manner, a plurality of types of index values representing reflection characteristics of the measurement surface 20 are obtained based on the intensity distribution of reflected light detected by the sensor 12f.

As one of the indices representing reflection characteristics of the measurement surface 20, a BRDF (Bidirectional Reflectance Distribution Function) is available. One method of obtaining a BRDF based on the intensity distribution of reflected light detected by the detection unit is described in, for example, Japanese Patent Laid-Open No. 2016-211999. The control unit 15 (processing unit 15a) obtains the Fourier transform of a BRDF by dividing the Fourier transform of the intensity distribution of the reflected light detected by the detection unit by the Fourier transform of slit information. The BRDF of the measurement surface 20 can be obtained by performing the inverse Fourier transform of the obtained Fourier transform. A BRDF is a function representing the distribution of reflectances of a measurement surface, and represents the ratio of the luminance of reflected light to the illuminance of incident light. In a more strict sense, a BRDF at a given point on an object surface is dependent on both incident and reflection directions and defined as the ratio of the intensity of reflected light (diffused light) to the intensity of incident light from an irradiation direction. That is, as shown in Fig. 4, a BRDF is an index indicating with what intensity distribution light entering a given point on a measurement surface is reflected (the intensity distribution of reflected light).

Indices representing reflection characteristics of the measurement surface 20 include, other than a BRDF, a specular gloss, haze, DOI (Distinctness of Image), image clarity, reflectance, and undulation. Several of these indices will be described. A specular gloss represents the light amount of a specular component. A haze represents the distribution of light around a specular component. A DOI and image clarity indicate a reduction in contrast of a glare image. A specular gloss, haze, DOI, and image clarity can be acquired or generated (calculated) based on an intensity distribution as a blurred image of a rectangular slit instead of a BRDF as a point image distribution function. Accordingly, the control unit 15 (processing unit 15a) can obtain these index values by referring to a table or performing convolution of apparatus information based on the intensity distribution of reflected light detected by the detection unit.

In this case, an incident angle θ (a reflection angle θ' of reflected light from the measurement surface 20) of light with which the measurement surface 20 is irradiated by the irradiation unit at the time of measurement of reflection characteristics of the measurement surface 20 is defined for each reflection characteristic index (standard) according to JIS, ISO, or the like. Accordingly, when, for example, a mirror gloss is to be measured as a reflection characteristic index, the incident angle θ is set to any one of 20°, 45°, 60°, 75°, and 85°. In addition, when a haze is to be measured as a reflection characteristic index, the incident angle θ is set to 20° or 30°. When an image clarity is to be measured as a reflection characteristic index, the incident angle θ is set to 45° or 60°. When a DOI is to be measured as a reflection characteristic index, the incident angle θ is set to 20° or 30°. The measurement unit 12 may be provided with a plurality of pairs of irradiation units and detection units so as to set different incident angles θ or provided with a driving unit that drives an irradiation unit and a detection unit so as to change the incident angle θ.

The plurality of types of index values (BRDF, mirror gloss, haze, DOI, image clarity, and the like) obtained by the processing unit 15a in this manner are stored in the storage unit 15b in association with each other.

The user checks the reflection tendency of light at the measurement surface 20 by referring to a BRDF indicating with what intensity distribution light entering the measurement surface 20 is reflected (the intensity distribution of reflected light). At this time, it is preferable in terms of user convenience to display the BRDF so as to allow the user to easily and quickly check the reflection tendency of the measurement surface 20 only by giving one glance at the display of the BRDF. Accordingly, the measurement system 100 obtains the two-dimensional BRDF of the measurement surface 20 based on the intensity distribution of reflected light detected by the measurement unit 12 (detection unit), and displays the obtained two-dimensional BRDF on the display unit 13a (or the display unit 18f).

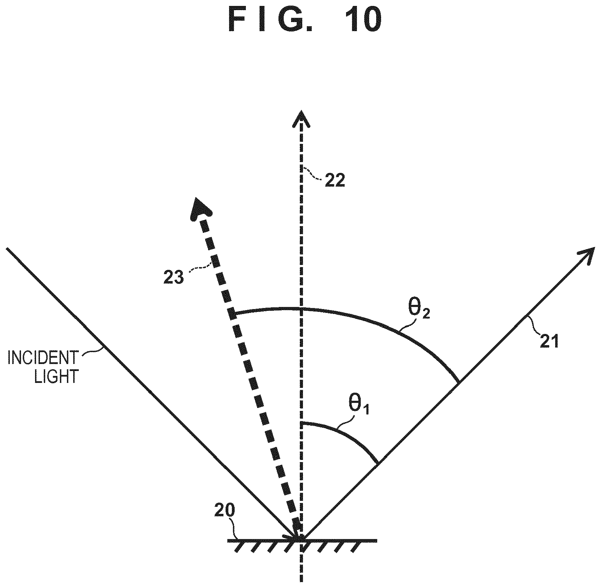

In this case, the measurement unit 12 (detection unit) detects the intensity distribution of reflected light in the range of predetermined directions, of the directions of reflected light from the measurement surface 20, which include a first direction 21 as the direction of specular light from the measurement surface 20. As shown in Fig. 10, the range of the predetermined directions is the range of directions that do not include a direction 23 defines, with the first direction 21, an angle θ₂ equal to or more than an angle θ₁ defined by the first direction 21 and a second direction 22 (normal direction) orthogonal to the measurement surface 20. That is, the range of the predetermined directions is the range of directions, of the directions of reflected light from the measurement surface 20, which do not include the direction 23 defining the angle θ₂, with the direction of specular light (first direction 21), which is equal to or more than the angle θ₁ (equal to or more than the reflection angle of specular light (θ₂ ≥ θ₁)).

The range of the predetermined directions corresponds to the range of 0° to 90° as the range of the reflection angles of reflected light from the measurement surface 20. That is, the range of the predetermined directions is the range of the directions of reflected light with reflection angles larger than 0° and smaller than 90°. In addition, the range of the predetermined directions includes a range on a first plane (an incident plane (for example, the drawing surface)) including specular light and a second plane (for example, a plane orthogonal to the drawing surface) including specular light. That is, the range of predetermined directions is defined on each of the first plane and the second plane.

Specific embodiments will be described below.

### <First Embodiment>

A processing unit 15a according to this embodiment generates an image (to be referred to as a two-dimensional image hereinafter) representing the BRDF, as a two-dimensional gradation distribution, which is obtained based on the detection result (the intensity distribution of reflected light) obtained by the detection unit in the above manner. An output unit 13 outputs (causes the display unit 13a to display) the two-dimensional image generated by processing unit 15a to a display unit 13a.

In this case, the user often wants to check the details of a BRDF near specular light. Accordingly, the processing unit 15a preferably generates a two-dimensional image such that part of the obtained BRDF which corresponds to a specular direction is arranged in a central portion of the two-dimensional image. At this time, the processing unit 15a preferably generates a two-dimensional image in a range in which the reflection angle of reflected light is equal to or more than 0° and equal to or less than 90°. Specular light is reflected light having a reflection angle θ' equal to an incident angle θ of light applied on a measurement surface (that is, the reflection angle θ' of specular light is equal to the incident angle θ). The central portion of a two-dimensional image is a region including the center of the two-dimensional image.

In this embodiment, the processing unit 15a of a measurement apparatus 10 generates a two-dimensional image. However, this is not exhaustive, and a processing unit 18a of an information processing apparatus 18 may generate a two-dimensional image by acquiring the detection result obtained by the detection unit from the a control unit 15 (storage unit 15b). In addition, in the embodiment, the output unit 13 of the measurement apparatus 10 outputs a two-dimensional image to the display unit 13a. However, this is not exhaustive. For example, the output unit 13 may output a two-dimensional image to a display unit 18f provided outside the measurement apparatus 10 (housing 11) or an output unit 18c of the information processing apparatus 18 may output a two-dimensional image to the display unit 18f of the display unit 13a.

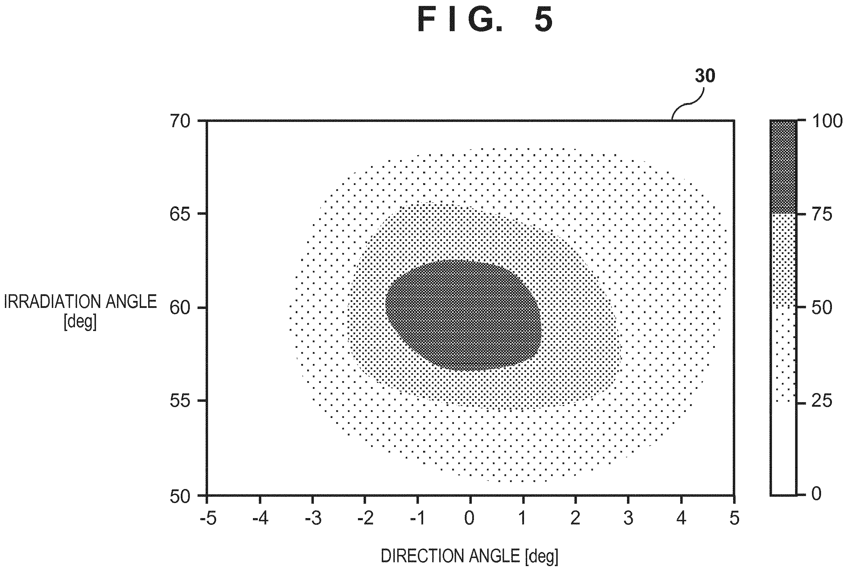

Fig. 5 is a view showing a two-dimensional image 30 generated by the processing unit 15a and displayed on the display unit 13a by the output unit 13. The two-dimensional image 30 shown in Fig. 5 represents a BRDF when the incident angle θ of light with which a measurement surface 20 is irradiated by the irradiation unit of a measurement unit 12 is set to 60°. The ordinate axis represents irradiation angle, and the abscissa axis represents direction angle. In this case, "irradiation angle" on the ordinate axis of the two-dimensional image 30 shown in Fig. 5 represents the reflection angle θ' and is set in the range of 60° ± 10° with reference to 60° that is the reflection angle θ' of reflected light (that is, the incident angle θ on the measurement surface 20). A "direction angle" on the abscissa axis in the two-dimensional image 30 shown in Fig. 5 represents an angle difference β (see Fig. 4) between specular light and reflected light in a direction orthogonal to a direction in which an irradiation angle (reflection angle θ') is defined and orthogonal to the optical axis of specular light and is set in the range of 0° ± 5°. That is, an "irradiation angle" and a "direction angle" represent angles in two directions each orthogonal to the optical axis of specular light, and a direction in which the irradiation angle is defined is orthogonal to a direction in which the direction angle is defined. Although in this embodiment, the ordinate axis represents "irradiation angle" and the abscissa axis represents "direction angle", the angles represented by the ordinate axis and the abscissa axis may be reversed such that the ordinate axis represents "direction angle" and the abscissa axis represents "irradiation angle".

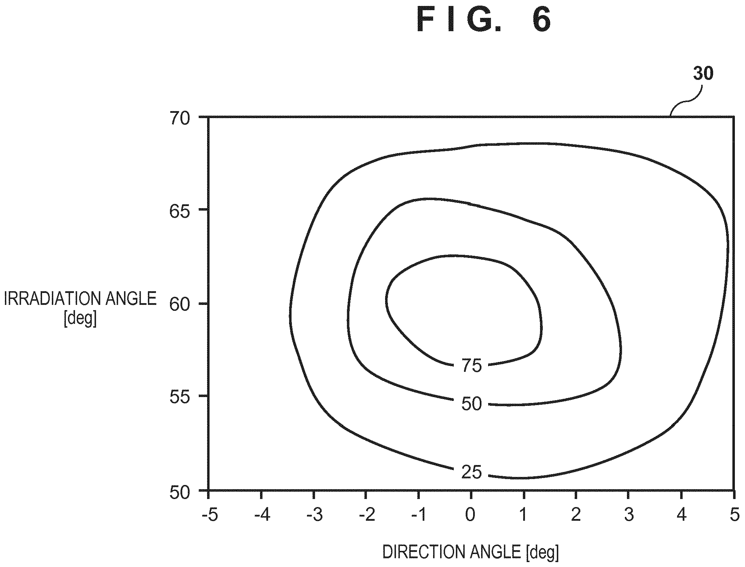

In the two-dimensional image 30 shown in Fig. 5, a BRDF is represented as a two-dimensional gradation distribution with a plurality of gradation levels indicating different ranges of BRDF values. A plurality of gradation levels are displayed so as to be identifiable with colors and patterns (patterns such as dots and stripes). More specifically, the two-dimensional image 30 shown in Fig. 5 is segmented into four gradation levels with different BRDF value ranges to represent a BRDF as a two-dimensional gradation distribution with four gradation levels with different patterns. In this case, a plurality of gradation levels may be represented by, for example, different colors in addition to different patterns, or may be represented by contour lines as shown in Fig. 6. Alternatively, a BRDF may be represented by a two-dimensional gradation distribution with changes (gradation) in color or pattern instead of using a plurality of gradation levels.

A method of generating a two-dimensional image using the processing unit 15a will be described next. The following will describe a method of generating a two-dimensional image representing a BRDF as a two-dimensional gradation distribution with a plurality of gradation levels. The processing unit 15a determines maximum and minimum BRDF values obtained based on the detection result (the intensity distribution of reflected light) obtained by the detection unit (sensor 12f). In this case, the processing unit 15a may normalize the BRDF value, obtained based on the detection result (the intensity distribution of reflected light) obtained by the detection unit (sensor 12f), based on the maximum and minimum BRDF values obtained by using a sample surface for calibration. That is, the obtained BRDF value may be normalized based on the maximum and minimum BRDF values respectively obtained as "10" and "0" using the sample surface for calibration.

The processing unit 15a then generates a two-dimensional image representing a BRDF as a two-dimensional gradation distribution based on the set values set by the user via the input unit 14. In this case, the processing unit 15a may generate the two-dimensional image so as to arrange part of the BRDF which corresponds to the specular direction in a central portion of the two-dimensional image. For example, the reflection angle θ' of specular light is determined by the incident angle θ of light with which the measurement surface 20 is irradiated by the irradiation unit of the measurement unit 12. This makes it possible to generate a two-dimensional image so as to arrange part of a BRDF which corresponds to the specular direction in the central portion as long as an irradiation angle range and a direction angle range are set.

In this case, the set values set by the user include "number of gradation levels", "range of each gradation level", "irradiation angle range (for example, ±10°)", and "direction angle range (for example, ±5°)". In addition, the processing unit 15a according to this embodiment generates a two-dimensional image so as to arrange part of the obtained BRDF which corresponds to the specular direction in a central portion of the two-dimensional image. However, this is not exhaustive. For example, the processing unit 15a may generate a two-dimensional image so as to arrange the maximum value of the obtained BRDF in a central portion (preferably the center) of the two-dimensional image.

As described above, a measurement system 100 according to this embodiment generates a two-dimensional image, as a two-dimensional gradation distribution, representing the BRDF obtained based on the detection result obtained by the detection unit. The measurement system 100 then outputs the generated two-dimensional image to the display unit 13a (or the display unit 18f). This allows the user to easily and quickly check the reflection tendency of the measurement surface 20 only by giving one glance at the two-dimensional image. Although this embodiment has exemplified the method of generating a two-dimensional image representing a BRDF as a two-dimensional gradation distribution, an image representing a BRDF as a three-dimensional gradation distribution may be generated by a similar method. It is also possible to generate an image representing the intensity distribution of reflected light detected by the detection unit as a two-dimensional gradation distribution by using a similar method.

### <Second Embodiment>

In a measurement system according to the second embodiment, a processing unit 15a outputs, to a display unit 13a (or causes it to display), the one-dimensional gradation distribution obtained by projecting a two-dimensional gradation distribution in a generated two-dimensional image in a direction set in advance (predetermined direction) based on the two-dimensional gradation distribution. The two-dimensional gradation distribution is projected by integrating a two-dimensional gradation distribution or extracting representative values. For example, the processing unit 15a generates an image representing a one-dimensional distribution in a predetermined direction (to be referred to as a one-dimensional image hereinafter) in the two-dimensional image (the two-dimensional gradation distribution) based on the generated two-dimensional image, and outputs the generated one-dimensional image and two-dimensional image to the display unit 13a. The measurement system according to the second embodiment has the same arrangement as that of the measurement system 100 according to the first embodiment, and hence a description of the arrangement will be omitted.

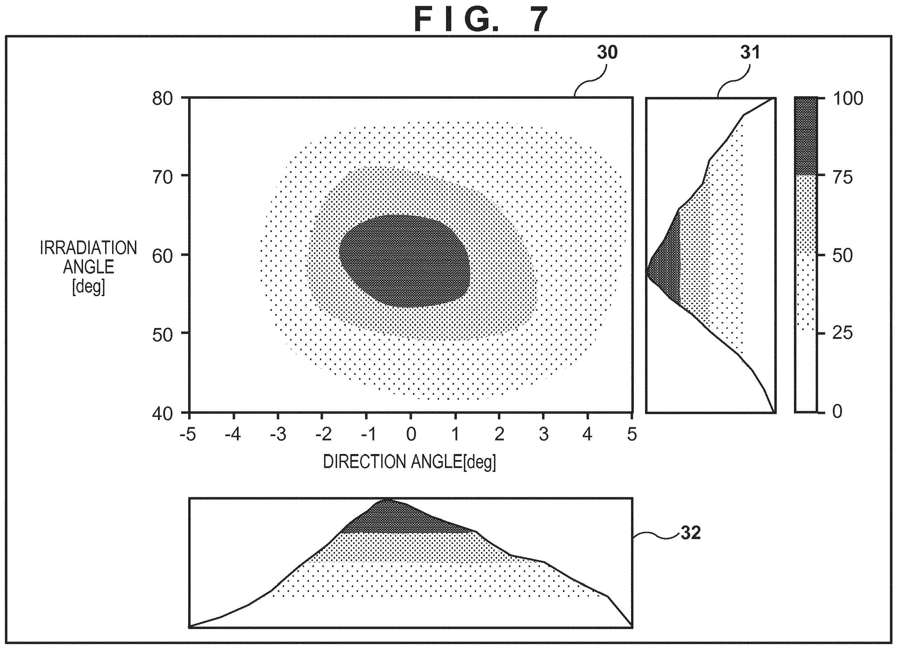

Fig. 7 is a view showing a two-dimensional image 30 and one-dimensional images 31 and 32. The one-dimensional images 31 and 32 each are an image (second image) representing a maximum value distribution in a predetermined direction in a two-dimensional image (two-dimensional gradation distribution) as a gradation distribution. The processing unit 15a generates a maximum value distribution with the abscissa axis representing maximum values (representative values) and the ordinate axis representing irradiation angles by obtaining a maximum BRDF value at each irradiation angle in the two-dimensional image 30 (extracting representative values). The processing unit 15a can generate the one-dimensional image 31 representing a maximum value distribution corresponding to irradiation angles as a gradation distribution by segmenting (gradation processing) the maximum value distribution according to a plurality of gradation levels used to generate the two-dimensional image 30.

Likewise, the processing unit 15a generates a maximum value distribution with the ordinate axis representing maximum values and the abscissa axis representing direction angles by obtaining maximum BRDF values at the respective direction angles in the two-dimensional image 30. The processing unit 15a can generate the one-dimensional image 32 representing a maximum value distribution corresponding to direction angles as a gradation distribution by segmenting (gradation processing) the maximum value distribution according to a plurality of gradation levels used to generate the two-dimensional image 30. The output unit 13 outputs, to the display unit 13a, the one-dimensional images 31 and 32 generated by the processing unit 15a so as to make the images adjacent to the two-dimensional image 30. Generating one-dimensional images and outputting them to the display unit 13a in this manner allow the user to easily check part of the two-dimensional image 30 which has a high intensity of reflected light and a specific BRDF shape.

Although this embodiment has exemplified the method of generating one-dimensional images each representing a maximum value distribution in a predetermined direction in a two-dimensional image as a gradation distribution, this is not exhaustive. For example, the integral values of a BRDF in a two-dimensional image may be obtained instead of maximum BRDF values in a two-dimensional image. In this case, the processing unit 15a generates an integral value distribution by obtaining the integral values of a BRDF at the respective irradiation angles (or the respective direction angles) in the two-dimensional image 30 (two-dimensional gradation distribution). The processing unit 15a then generates a one-dimensional image representing an integral value distribution corresponding to irradiation angles (or direction angles) as a gradation distribution. The processing unit 15a may generate a one-dimensional image representing a BRDF distribution on a line crossing the two-dimensional image 30 (two-dimensional gradation distribution) as a gradation distribution instead of the one-dimensional image representing the maximum value distribution or the integral value distribution as a gradation distribution. For example, the processing unit 15a may generate a one-dimensional image representing a BRDF distribution at a predetermined irradiation angle (for example, 60°) as a gradation distribution. In addition, in this embodiment, the output unit 13 outputs the two-dimensional image 30 and the one-dimensional images 31 and 32 to the display unit 13a. However, the output unit 13 may output only the one-dimensional images 31 and 32 to the display unit 13a.

### <Third Embodiment>

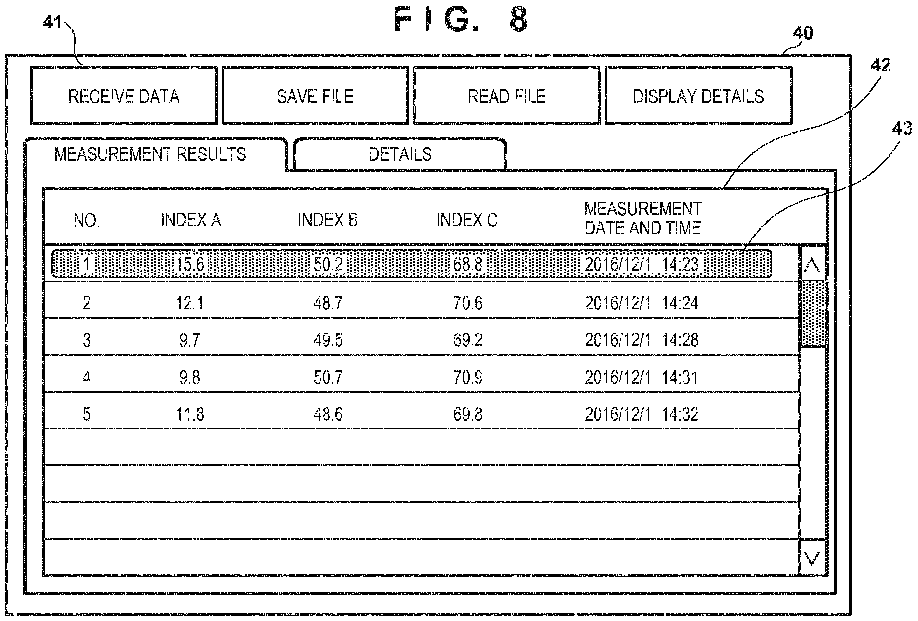

The third embodiment will exemplify a method of causing an information processing apparatus 18 to process a plurality of measurement results obtained by a plurality of times of measurement by a measurement unit 12. Fig. 8 is a view showing an example of a screen (list window 40) of a display unit 18f that displays a list of a plurality of measurement results obtained by a plurality of (five) times of measurement of reflection characteristics. A processing unit 18a can include software having a function of causing an output unit 18c to display a list of a plurality of measurement results on the display unit 18f. In this case, this embodiment will exemplify a method of causing the information processing apparatus 18 to process a plurality of measurement results. However, for example, a similar method can also be applied to a case in which a control unit 15 of a measurement apparatus 10 processes a plurality of measurement results.

When the user presses a data reception button 41 of the list window 40 via an input unit 18d, the processing unit 18a acquires a plurality of data obtained by a plurality of times of measurement of reflection characteristics by the measurement unit 12 and stored in a storage unit 15b of the control unit 15 from the control unit 15. The processing unit 18a then causes a storage unit 18b to store the plurality of data acquired from the control unit 15. Each data can include a measurement result (index value) on a reflection characteristic of a measurement surface 20 and a two-dimensional image 30 (which may include the one-dimensional images described in the second embodiment) obtained by the control unit 15 (processing unit 15a) of the measurement apparatus 10.

The processing unit 18a then causes the output unit 18c to display a list of a plurality of measurement results in a region 42 of the list window 40 based on a plurality of data stored in the storage unit 18b. In this case, the list window 40 shown in Fig. 8 displays indices A, B, and C as measurement results on reflection characteristics of the measurement surface 20. Each index value displayed on the list window 40 is any one of a specular gloss, haze, DOI, image clarity, reflectance, and undulation, and can be arbitrarily set by the user. In addition, when the user selects one measurement result from the list of the plurality of measurement results via the input unit 18d, the processing unit 18a emphatically displays (for example, displays a selection mark 43) the measurement result selected by the user (No. 1 in Fig. 8).

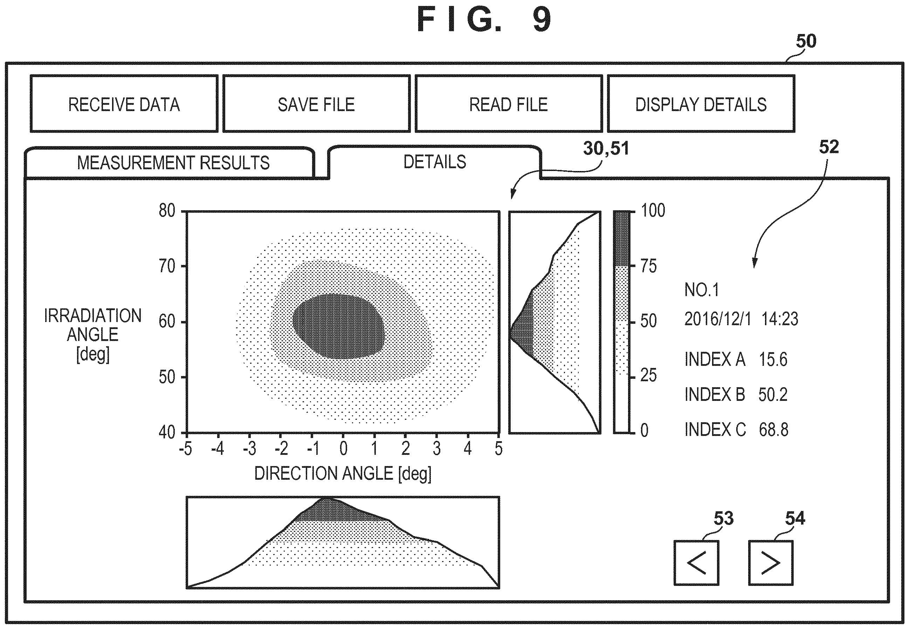

In this case, when checking the two-dimensional image 30 of a BRDF concerning the selected measurement result, the user further presses (for example, double-clicks) the measurement result on which the selection mark 43 is displayed via the input unit 18d. At this time, as shown in Fig. 9, the processing unit 18a switches the display tab to display the two-dimensional image 30 (which may include a one-dimensional image) of a BRDF stored in association with the measurement result selected by the user. Fig. 9 is a view showing a screen (detailed window 50) of the display unit 18f on which the two-dimensional image 30 of a BRDF is displayed. The detailed window 50 displays the two-dimensional image 30 of a BRDF associated with the measurement result selected by the user in a region 51, and displays the measurement result (the index value of a reflection characteristic) and information about measurement date and time in a region 52. When the user presses a return button 53 or advance button 54 of the detailed window 50 via the input unit 18d, the processing unit 18a switches the data (the two-dimensional image of a BRDF and the index value of the reflection characteristic) displayed on the detailed window 50 to another data and displays it. When the user further presses a list tab 55 on the screen, the processing unit 18a switches the detailed window 50 to the list window 40 and displays it. Although in this embodiment, as shown in Figs. 8 and 9, the list window 40 and the detailed window 50 are respectively displayed in different tabs on the same window, they may be respectively displayed on different windows.

### <Other Embodiments>

The present invention can also be implemented by supplying a program for implementing one or more functions of each embodiment described above to a system or apparatus via a network or a storage medium and causing one or more processors in the system or apparatus to read and execute the program. The present invention can also be implemented by a circuit implementing one or more functions (for example, ASIC).

The present invention is not limited to the above-described embodiments, and various changes and modifications can be made within the spirit and scope of the present invention. Therefore, to apprise the public of the scope of the present invention, the following claims are made.

This application claims the priority on the basis of Japanese Patent Application No. 2017-004614, filed January 13, 2017, which is hereby incorporated by reference herein in its entirety.

## Claims

1. A measurement apparatus **characterized by** comprising:
an irradiation unit configured to obliquely irradiate a surface with light;
a detection unit configured to detect an intensity distribution of reflected light from the surface;
a processing unit configured to obtain a two-dimensional BRDF of the surface based on the intensity distribution; and
a display unit configured to display the BRDF obtained by the processing unit,
wherein the detection unit detects the intensity distribution in a direction range that includes a first direction as a direction of specular light from the surface and does not include a direction that defines, together with the first direction, an angle not less than an angle defined by the first direction and a second direction orthogonal to the surface.

2. The measurement apparatus according to claim 1, **characterized in that** the range corresponds, as a range of reflection angles of the reflected light, to a range not less than 0° and not more than 90°.

3. The measurement apparatus according to claim 1 or 2, **characterized in that** the range is a range on each of an incident plane including the specular light and a plane including the specular light and orthogonal to the incident plane.

4. The measurement apparatus according to any one of claims 1 to 3, **characterized in that** the processing unit causes the display unit to display the BRDF as a two-dimensional gradation distribution.

5. The measurement apparatus according to claim 4, **characterized in that** the processing unit causes the display unit to display a one-dimensional gradation distribution obtained by projecting the gradation distribution in a predetermined direction.

6. The measurement apparatus according to claim 5, **characterized in that** the processing unit performs the projection by integrating the two-dimensional gradation distribution or extracting representative values.

7. The measurement apparatus according to claim 5 or 6, **characterized in that** the processing unit causes the display unit to display a one-dimensional gradation distribution as a gradation distribution on a line crossing the two-dimensional gradation distribution.

8. The measurement apparatus according to any one of claims 4 to 7, **characterized in that** the processing unit causes the display unit to display the gradation distribution with a change in color.

9. The measurement apparatus according to any one of claims 4 to 7, **characterized in that** the processing unit causes the display unit to display the gradation distribution with a change in pattern.

10. The measurement apparatus according to any one of claims 1 to 9, **characterized in that** the processing unit obtains at least one of a mirror gloss, a haze, a DOI, an image clarity, a reflectance, and an undulation of the surface based on the intensity distribution, and cause the display unit to display the at least one.

11. The measurement apparatus according to any one of claims 1 to 10, **characterized by** further comprising a housing provided with the irradiation unit and the detection unit,
wherein the display unit is provided outside the housing.

12. An information processing apparatus that processes information of an intensity distribution of reflected light from a surface which is obtained by obliquely irradiating the surface with light, **characterized by** comprising:
a first processing unit configured to obtain a two-dimensional BRDF of the surface based on the information; and
a second processing unit configured to cause a display unit to display the BRDF as a two-dimensional gradation distribution,
wherein the intensity distribution is obtained in a direction range that includes a first direction as a direction of specular light from the surface and does not include a direction that defines, together with the first direction, an angle not less than an angle defined by the first direction and a second direction orthogonal to the surface.

13. An information processing method of processing information of an intensity distribution of reflected light from a surface which is obtained by obliquely irradiating the surface with light, **characterized by** comprising:
a first step of obtaining a two-dimensional BRDF of the surface based on the information; and
a second step of causing a display unit to display the BRDF as a two-dimensional gradation distribution,
wherein the intensity distribution is obtained in a direction range that includes a first direction as a direction of specular light from the surface and does not include a direction that defines, together with the first direction, an angle not less than an angle defined by the first direction and a second direction orthogonal to the surface.

14. A program for causing a computer to execute each step in an information processing method defined in claim 13.

15. A measurement apparatus **characterized by** comprising:
an irradiation unit configured to obliquely irradiate a surface with light;
a detection unit configured to detect an intensity distribution of reflected light from the surface;
a processing unit configured to obtain a two-dimensional BRDF of the surface based on the intensity distribution and obtain a one-dimensional gradation distribution by projecting the two-dimensional BRDF in a predetermined direction; and
a display unit configured to display the one-dimensional gradation distribution obtained by the processing unit.

16. The measurement apparatus according to claim 15, **characterized in that** the processing unit performs the projection by integrating the two-dimensional BRDF or extracting representative values.

17. The measurement apparatus according to claim 15 or 16, **characterized in that** the processing unit causes the display unit to display a one-dimensional gradation distribution as a gradation distribution on a line crossing the two-dimensional BRDF.

18. An information processing apparatus that processes information of an intensity distribution of reflected light from a surface which is obtained by obliquely irradiating the surface with light, **characterized by** comprising:
a first processing unit configured to obtain a two-dimensional BRDF of the surface based on the information; and
a second processing unit configured to cause a display unit to display a one-dimensional gradation distribution obtained by projecting the two-dimensional BRDF in a predetermined direction.

19. An information processing method of processing information of an intensity distribution of reflected light from a surface which is obtained by obliquely irradiating the surface with light, **characterized by** comprising:
a first step of obtaining a two-dimensional BRDF of the surface based on the information; and
a second step of causing a display unit to display a one-dimensional gradation distribution obtained by projecting the two-dimensional BRDF in a predetermined direction.

20. A program for causing a computer to execute a step in an information processing method defined in claim 19.
